# EUROPÄISCHE PATENTSCHRIFT

(11) **EP 2 989 061 B1**
(45) Veröffentlichungstag und Bekanntmachung des Hinweises auf die Patenterteilung: **01.02.2017**
(21) Anmeldenummer: 14718608.4
(22) Anmeldetag: 22.04.2014
(51) Int. Cl.: C04B 26/04, C08F 8/00, C08K 5/13

(54) **REAKTIONSHARZ-ZUSAMMENSETZUNG SOWIE DEREN VERWENDUNG**
REACTION RESIN COMPOSITION AND ITS USE
COMPOSITION DE RÉSINE RÉACTIVE ET SON UTILISATION

(30) Priorität: 22.04.2013 EP 13164652
(43) Veröffentlichungstag der Anmeldung: 02.03.2016
(73) Patentinhaber: Hilti Aktiengesellschaft, 9494 Schaan (LI)
(72) Erfinder: PFEIL, Armin, 86916 Kaufering (DE); KUMRU, Memet-Emin, 86199 Augsburg (DE)
(86) Internationale Anmeldenummer: PCT/EP2014/058065
(87) Internationale Veröffentlichungsnummer: WO 2014/173864

(56) Entgegenhaltungen:
- EP-A1- 2 357 162
- EP-A2- 1 935 860
- DE-B3-102010 051 818
- DE-B3-102011 077 248
- DE-B3-102011 077 254

## Beschreibung

Die vorliegende Erfindung betrifft eine Reaktionsharz-Zusammensetzung, insbesondere eine kalthärtende Reaktionsharz-Zusammensetzung auf Basis einer radikalisch härtbaren Verbindung und einer Verbindung, die mit einem Amin härten kann, sowie deren Verwendung, insbesondere zur chemischen Befestigung von Verankerungsmittel in Bohrlöchern.

Die Verwendung von Reaktionsharzmischungen auf der Basis von ungesättigten Polyesterharzen, Vinylesterharzen oder von Epoxidharzen als Klebe- und Haftmittel, ist seit langem bekannt. Es handelt sich dabei um Zweikomponentensysteme, wobei eine Komponente die Harzmischung und die andere Komponente das Härtungsmittel enthält. Andere, übliche Bestandteile wie Füllmittel, Beschleuniger, Stabilisatoren, Lösungsmittel einschließlich Reaktivlösungsmittel (Reaktivverdünner) können in der einen und/oder der anderen Komponente enthalten sein. Durch Vermischen der beiden Komponenten wird dann die Reaktion unter Bildung eines gehärteten Produktes in Gang gebracht.

Insbesondere für die chemische Befestigungstechnik, z.B. Dübelmassen, werden hohen Anforderungen an die Reaktivharzmassen gestellt, da bei dieser Anwendung die mechanische Stärke, die Haftung an mineralischen Untergründen und auch an anderen Untergründen, wie Glas, Stahl und dergleichen, sehr gut sein müssen. Eine Größe für die Beurteilung der mechanischen Stärke und der Hafteigenschaften ist der sogenannte Auszugstest. Ein niedriger Auszugswert, auch Lastwert genannt, weist auf geringe Zugfestigkeit und geringe Haftung am Untergrund hin. Bei Verwendung von Reaktivharzmassen als organisches Bindemittel für Mörtel- und/oder Dübelmassen müssen auch unter strengen Bedingungen hohe Lastwerte erreicht werden, etwa bei niedrigen Temperaturen, wie es im Winter oder bei großen Höhenlagen der Fall ist, als auch bei hohen Temperaturen, wie es im Sommer ist der Fall ist.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis. Das erste System zeichnet sich durch eine schnelle Aushärtung, insbesondere bei tiefen Temperaturen wie -10°C aus, weist jedoch einen relativ hohen Schrumpf und Schwächen bei den Lastwerten auf. Dem gegenüber weisen die Epoxid-Amin-Systeme zwar eine langsamere Härtungsgeschwindigkeit, insbesondere bei niedrigen Temperaturen unter +5°C auf, weisen jedoch wesentlich weniger Schrumpf auf und sind hinsichtlich der Lastwerte vorteilhaft.

Um die Vorteile der beiden Systeme zu vereinen, laufen Entwicklungen dahingehend, dualhärtende Bindemittel zu entwickeln. Dies bedeutet, Systeme, deren Aushärtung sowohl radikalisch als auch durch Polyaddition erfolgt. Diese werden auch Hybridsysteme oder Hybridbindemittel genannt. Diese Hybridsysteme basieren auf Harzzusammensetzungen, die nach einem ersten Reaktionstyp härtbare Verbindungen, zum Beispiel radikalisch polymerisierbare Verbindungen, und nach einem zweiten, von dem ersten Reaktionstyp unterschiedlichen Reaktionstyp härtbare Verbindungen, wie Verbindungen, die durch Polyaddition polymerisierbare Verbindungen, zum Beispiel Epoxide, enthalten. Eine Harzzusammensetzung auf Basis einer radikalisch polymerisierbaren Verbindung und eines Epoxids lassen sich beispielsweise mit einem Peroxid und einem Amin härten, wobei die radikalische Härtungsreaktion mit einer Übergangsmetallverbindung beschleunigt werden kann. Allerdings wurde festgestellt, dass die Tieftemperatureigenschaften bei der Aushärtung von Reaktionsharzsystemen, die durch Zugabe eines aliphatischen Amins und eines Peroxids zu einem Hybridbindemittel, das ein radikalisch härtbares Harz, ausgewählt unter ungesättigten Polyestern oder Vinylestern, und ein Epoxidharz enthält, aushärten, schlecht sind.

Die EP 2357162 A1 beschreibt eine Reaktionsharz-Zusammensetzung auf Basis eines Systems mit einer Hybridharz-Zusammensetzung (Hybridbindemittel), die ein radikalisch härtbares Harz und ein Epoxidharz enthält, und mit einem Härter, der ein aliphatisches Amin und ein Peroxid enthält. Nachteilig an dieser Reaktionsharz-Zusammensetzung allerdings ist, dass diese, insbesondere als Zweikomponentensystem nicht lagerstabil konfektioniert werden kann, da Peroxide als Radikalinitiatoren eingesetzt werden.

In dem Artikel "Curing behaviour of IPNs formed from model VERs and epoxy systems I amin cured epoxy", K. Dean, W.D. Cook, M.D. Zipper, P. Burchill, Polymer 42(2001), 1345-1359, ist unter anderem beschrieben, dass wenn Cumenhydroperoxid, Benzoylperoxid oder Methylethylketonperoxid, mit oder ohne Kobaltoctoat, als Radikalstarter eingesetzt werden, die Peroxide vorzeitig - etwa bei Lagerung - zersetzt werden, was sich negativ auf die radikalische Härtungsreaktion auswirkt. Ferner wird beschrieben, dass eine Härtung erst bei erhöhten Temperaturen, d.h. erst ab +70°C stattfindet, womit derartige Initiator-Systeme für bei Raumtemperatur härtende Zusammensetzungen nicht geeignet wären.

Die Erfinder konnten bestätigen, dass eine Kombination aus Perester als Radikalinitiator mit einem Amin als Härtungsmittel für das Epoxidharz nicht lagerstabil ist. Dies wird darauf zurückgeführt, dass die Perester aufgrund Ihrer reaktiven Carbonylgruppe schnell mit Aminen reagieren. Die durch die Aminolyse gebildeten Hydroperoxide sind jedoch bei dem für die Härtung des Epoxidharzes erforderlichen Überschuss an Aminen instabil, insbesondere nicht lagerstabil.

Dementsprechend kann die Reaktionsharz-Zusammensetzung der EP 2357162 A1 nicht als ein übliches Zweikomponentensystem, bei dem die Harzkomponente und die Härterkomponente reaktionsinhibierend, getrennt voneinander sind, konfektioniert werden.

Für ein Hybridmittel, wie es in der EP 2357162 A1 beschrieben ist, würde in einem Zweikammersystem die Harzkomponente, die in einer ersten Kammer enthalten ist, die radikalisch härtbare Verbindung, die mit einem Amin härtbare Verbindung, Katalysatoren, Beschleuniger, gegebenenfalls Reaktivverdünner, Inhibitoren und eine Verbindung zur Brückenbildung enthalten. Die Härterkomponente, die in einer zweiten Kammer enthalten ist, würde dann die beiden Härtungsmittel, das Peroxid und das Amin, enthalten. Dies führt allerdings zu den oben erwähnten Problemen.

Ein Weg, die Lagerstabilität des beschriebenen Systems zu erhöhen, könnte darin liegen, weniger reaktive Peroxide als Radikalinitiator zu verwenden, wie etwa Dialkylperoxide. Diese Peroxide haben jedoch den entscheidenden Nachteil, dass sie, wie oben geschildert, erst bei höheren Temperaturen zerfallen und die Polymerisation des radikalisch härtenden Harzbestandteils nicht bei den für Mörtelanwendungen erforderlichen Bedingungen oder nur sehr verzögert stattfinden kann. Dies führt wiederum zu ungenügender Aushärtung des Hybridbindemittels und demensprechenden zu ungenügenden Eigenschaften der ausgehärteten Zusammensetzung.

Es besteht also Bedarf an einer Hybridharz-Zusammensetzung bzw. einem Hybridbindemittel, welche bzw. welches als Zweikomponentensystem konfektioniert werden kann, über Monate hinweg lagerstabil ist und bei den für Reaktionsharzmörtel üblichen Anwendungstemperaturen, d.h. zwischen -10°C und +60°C zuverlässig aushärtet, d.h. kalthärtend ist.

Die Aufgabe der Erfindung liegt darin, eine Hybridharz-Zusammensetzung bereitzustellen, welche die oben erwähnten Nachteile des Systems aus dem Stand der Technik nicht aufweist, welches insbesondere kalthärtend ist und als lagerstabiles Zweikomponentensystem konfektioniert werden kann.

Die Erfinder haben überraschend herausgefunden, dass dies dadurch erreicht werden kann, indem für das oben beschriebene Hybridbindemittel Dialkylperoxide als Radikalinitiator eingesetzt werden.

Zum besseren Verständnis der Erfindung werden zunächst die folgenden Erläuterungen der hierin verwendeten Terminologie als sinnvoll erachtet. Im Sinne der Erfindung bedeutet:
- "*Hybridbindemittel*", hierin gleichbedeutend auch als "*dualhärtendes Bindemittel*" bezeichnet, ein System, dessen Aushärtung sowohl radikalisch als auch durch Polyaddition erfolgt; diese Hybridbindemittel basieren auf Harzzusammensetzungen, die nach einem ersten Reaktionstyp härtbare Verbindungen, wie radikalisch polymerisierbare Verbindungen, und nach einem zweiten, von dem ersten Reaktionstyp unterschiedlichen Reaktionstyp härtbare Verbindungen, wie Verbindungen, die durch Polyaddition polymerisierbare Verbindungen, zum Beispiel Epoxide, enthalten;
- "*kalthärtend*", dass die Polymerisation, hierin auch gleichbedeutend als "*Härtung*" bezeichnet, der beiden härtbaren Verbindungen bei Raumtemperatur ohne zusätzlichen Energieeintrag, etwa durch Wärmezufuhr, durch die in den Reaktionsharz-Zusammensetzungen enthaltenen Härtungsmitteln, gegebenenfalls in Anwesenheit von Beschleunigern, gestartet werden kann und auch eine für die geplanten Anwendungszwecke ausreichende Durchhärtung zeigen;
- "*einwertig*", "*zwei- oder mehrwertig*" im Zusammenhang mit der Kupfer- bzw. der Vanadiumverbindung, dass es sich um Verbindungen handelt, in denen das Kupfer bzw. das Vanadium in der Oxidationsstufe +I (einwertig), +II (zweiwertig) oder höher (>+II; mehrwertig) vorliegt;
- "*oxidationsstabil*" im Zusammenhang mit Kupfer(I)salzen, dass diese, insbesondere unter den in den erfindungsgemäßen Zusammensetzungen, vor allem anorganisch gefüllten Zusammensetzungen, herrschenden Bedingungen, ausreichend stabil gegenüber Luftsauerstoff sind und nicht zu höherwertigen Kupferverbindungen oxidiert werden;
- "*Härtungsmittel*" Stoffe, welche die Polymerisation (das Härten) des Grundharzes bewirken;
- "*aliphatische Verbindung*" eine acyclische und cyclische, gesättigte oder ungesättigte Kohlenwasserstoffverbindung, die nicht aromatisch ist (PAC, 1995, 67, 1307; Glossary of class names of organic compounds and reactivity intermediates based on structure (IUPAC Recommendations 1995));
- "*Polyamin*" eine gesättigte, offenkettige oder cyclische organische Verbindung, die von einer wechselnden Anzahl sekundärer Aminogruppen (-NH-) unterbrochen ist und die, insbesondere im Falle der offenkettigen Verbindungen, primäre Aminogruppen (-NH₂) an den Kettenenden aufweist;
- "*Beschleuniger*" eine zur Beschleunigung der Polymerisationsreaktion (Härtung) fähige Verbindung, die dazu dient, die Bildung des Radikalstarters zu beschleunigen;
- "*Polymerisationsinhibitor*", hierin gleichbedeutend auch als "*Inhibitor*" bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass die Gelzeit nicht beeinflusst wird; um den Zeitpunkt des Starts der Polymerisationsreaktion zu beeinflussen, wird der Inhibitor üblicherweise in solchen Mengen eingesetzt, dass die Gelzeit beeinflusst wird;
- "*Reaktivverdünner*" flüssige oder niedrigviskose Monomere und Grundharze, welche andere Grundharze oder den Harzbestandteil verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- "*Gelzeit*" für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- "*Zweikomponentensystem*" ein System, das zwei voneinander getrennt gelagerte Komponenten, im Allgemeinen eine Harz- und eine Härterkomponente, umfasst, so dass eine Härtung der Harzkomponente erst nach dem Mischen der beiden Komponenten erfolgt;
- "*Mehrkomponentensystem*" ein System, das drei oder mehrere voneinander getrennt gelagerte Komponenten umfasst, so dass eine Härtung der Harzkomponente erst nach dem Mischen aller Komponenten erfolgt;
- "*(Meth)acryl...*/*...(meth)acryl...*", dass sowohl die "Methacryl.../...methacryl..."- als auch die "Acryl.../...acryl..."-Verbindungen umfasst sein sollen.

Der Vorteil von Dialkylperoxiden, nämlich deren außerordentliche Stabilität, insbesondere gegenüber Aminen, führt allerdings dazu, dass eine Zerfallsreaktion zur Initiierung der radikalischen Polymerisation der ungesättigten Verbindung bei Raumtemperatur nicht erwartet wird. Daher ist es erforderlich, die Zerfallsreaktion zu aktivieren, um ein raumtemperaturhärtendes System, wie es für die Anwendung im Bereich der chemischen Befestigungstechnik benötigt wird, zu erhalten.

Die Erfinder haben nun, entgegen der herrschenden Meinung, herausgefunden, dass sich Dialkylperoxide mit einer Kombination aus bestimmten Verbindungen aktivieren lassen, so dass es möglich ist, eine dualhärtende Reaktionsharz-Zusammensetzung bereitzustellen, die bei Raumtemperatur aushärtet und die, insbesondere als Zweikomponentensystem konfektioniert, lagerstabil ist.

Ein erster Gegenstand der Erfindung ist daher eine Reaktionsharz-Zusammensetzung, umfassend einen Harzbestandteil (A), der eine Verbindung (a-1), die radikalisch polymerisieren kann, eine Verbindung (a-2), die mit einem Amin reagieren kann, und eine verbrückende Verbindung (a-3) mit mindestens zwei reaktiven Funktionalitäten, wovon eine radikalisch (co)polymerisieren und eine mit einem Amin reagieren kann, enthält, und einen Härterbestandteil (H), der mindestens ein Dialkylperoxid (h-1) und mindestens ein Amin (h-2) enthält, wobei der Harzbestandteil (A) und der Härterbestandteil (H) oder der Harzbestandteil (A) und das mindestens eine Dialkylperoxid (h-1) und das mindestens eine Amin (h-2) des Härterbestandteils (H) räumlich getrennt voneinander sind, um eine Reaktion vor dem Vermischen dieser Komponenten zu verhindern, die dadurch gekennzeichnet ist, dass der Härterbestandteil (H) ferner ein Beschleunigergemisch (B) enthält, das eine Kupferverbindung (b-1) und eine 1,3-Dicarbonylverbindung (b-2) umfasst, mit der Maßgabe, dass der Harzbestandteil (A) ferner ein Reduktionsmittel (R) enthält, wenn die Kupferverbindung (b-1) zwei- oder mehrwertig ist.

Die Kupferverbindung (b-1) ist zweckmäßig ein zweiwertiges oder ein oxidationsstabiles einwertiges Kupfersalz, mit der Maßgabe, dass im Falle eines zweiwertigen Kupfersalzes die Reaktionsharz-Zusammensetzung ferner ein Reduktionsmittel (R) enthält.

Das eigentlich aktivierende Kupfersalz ist ein einwertiges Kupfersalz (Cu(I)-Salz). Aufgrund der leichten Oxidierbarkeit der Cu(I)-Salze durch Luftsauerstoff, wird das Cu(I)-Salz *in situ* durch ein Cu(II)-Salz mit einem geeigneten Reduktionsmittel gebildet. Dementsprechend enthält die Zusammensetzung erfindungsgemäß bevorzugt ein Cu(II)carboxylat als Cu(II)-Salz. Geeignete Cu(II)carboxylate sind: Cu(II)octoat, Cu(II)naphthenat, Cu(II)acetat, Cu(II)trifluoroacetat, Cu(II)tartrat, Cu(II)gluconat, Cu(II)cyclohexanbutyrat, Cu(II)iso-butyrate. Prinzipiell sind jedoch alle Cu(II)salze geeignet, welche sich in der radikalisch polymerisierbaren Verbindung und/oder dem Reaktivverdünner, sofern dieser zugegeben wird, gut lösen.

Alternativ ist es möglich, oxidationsstabile Cu(I)-Salze, wie etwa den 1,4-Diazabicyclo[2.2.2]octan)kupfer(I)chlorid-Komplex (CuCl·DABCO-Komplex), anstelle einer Kombination aus einem zweiwertigen Kupfersalz und einem Reduktionsmittel zu verwenden.

Als Reduktionsmittel (R) zur Reduktion des zweiwertigen Kupfersalzes zum einwertigen Kupfersalz sind alle Reduktionsmittel geeignet, die in der Lage sind, *in situ* das zweiwertige Kupfersalz zum aktivierenden einwertigen Kupfersalz zu reduzieren. Beispielhaft können hier Metalle, wie Cu, Zn, Fe, Ascorbinsäure, Ascorbate, Ascorbinsäure-6-palmitat oder -stearat, Zinn(II)-Salze, wie Zinn(II)octoat, Brenzkatechin und Derivate davon, Hydrochinon oder, gegebenenfalls substituierte, Derivate davon, wie Methylhydrochinon, und Eisen(II)-Salze, wie Borchi® OXY-Coat (Firma OMG Borchers), genannt werden.

Ein weiterer Bestandteil des erfindungsgemäßen Beschleunigergemisches (B) ist eine 1,3-Dicarbonylverbindung (b-2), die unter Verbindungen mit der allgemeinen Formel (I) ausgewählt ist 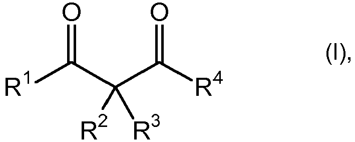 in der R¹ und R⁴ unabhängig voneinander für einen n-wertigen organischen Rest stehen; R² und R³ unabhängig voneinander für Wasserstoff oder einen n-wertigen organischen Rest stehen; oder R² mit R³ oder R³ mit R⁴ zusammen einen Ring bilden, welcher gegebenenfalls Heteroatome im oder am Ring umfasst; oder R¹ und R⁴ unabhängig voneinander für -OR⁵ stehen, wobei R⁵ für eine, gegebenenfalls substituierte, Alkyl-, Cycloalkyl-, Aryl- oder Aralkylgruppe steht, oder R⁵ zusammen mit R³ einen Ring bildet, welcher gegebenenfalls weitere Heteroatome im oder am Ring aufweist.

Als "*n-wertiger organischer Rest*" wird hier und im Folgenden ein organischer Rest bezeichnet, zu welchem n Bindungen erfolgen. So sind beispielsweise Alkyl, Aryl, Aralkyl, Cycloalkyl, Oxyalkyl einwertige Reste, Methylen oder Phenylen zweiwertige Reste, während beispielsweise 1,2,3-Butantriyl ein dreiwertiger Rest ist.

In einer bevorzugten Ausführungsform ist die Verbindung der Formel (I) eine Verbindung der Formel (II) 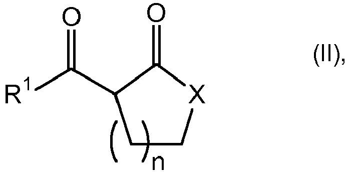 in der n für 1, 2 oder 3, bevorzugt für 1 oder 2, steht und X für O, S, oder NR⁶, bevorzugt für O, steht, worin R⁶ für Wasserstoff oder eine, gegebenenfalls substituierte, Alkyl-, Cycloalkyl-, Aryl oder Aralkylgruppe steht.

In einer besonders bevorzugten Ausführungsform steht n für 1, X für O und R¹ für OR⁷, worin R⁷ für eine, gegebenenfalls substituierte, Alkylgruppe, besonders bevorzugt Methylgruppe, steht. Ganz besonders bevorzugt ist die Verbindung der Formel (II) α-Acetylbutyrolacton (ABL).

In einer bevorzugten Ausführungsform umfasst das Beschleunigergemisch (B) ferner noch eine Vanadiumverbindung (b-3). Hierdurch lässt sich die Aushärtung der Zusammensetzung nochmals verbessern, was sich in einer kürzeren Gelzeit und einer besseren Durchhärtung niederschlägt.

Als Vanadiumverbindung (b-3) können insbesondere Salze des vier- oder fünfwertigen Vanadiums (V(IV)-, V(V)-Salze) verwendet werden, wobei die fünfwertigen bevorzugt sind. Geeignete Vanadiumsalze sind beispielsweise das Vanadium(IV)oxid-bis(2,4-pendandionat) (Produkt AB106355; Fa. ABCR GmbH & Co. KG) oder bevorzugt das V(V)-Salz eines sauren Phosphorsäureesters (Produkt VPO0132; Fa. OMG Borchers GmbH).

Als radikalisch polymerisierbare Verbindungen (a-1) sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)-acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Als Epoxidharz (a-2) kommt eine Vielzahl der hierfür dem Fachmann bekannten und kommerziell erhältlichen Verbindungen in Betracht, die im Mittel mehr als eine EpoxidGruppe, vorzugsweise zwei Epoxid-Gruppen, pro Molekül enthalten. Diese EpoxidVerbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet, Geeignete Polyepoxid-Verbindungen sind z.B. in Lee, Neville, Handbook of Epoxy Resins 1967, beschrieben. Vorzugsweise handelt es sich bei den Epoxiden um Glycidylether, die sich von mehrwertigen Alkoholen, insbesondere Bisphenolen und Novolaken ableiten. Die Epoxidharze haben ein Epoxyäquivalentgewicht von 120 bis 2000 g/EQ, vorzugsweise von 140 bis 400. Es können auch Mischungen von mehreren Epoxidharzen verwendet werden. Besonders bevorzugt werden flüssige Diglycidylether auf Basis von Bisphenol A und/oder F mit einem Epoxyäquivalentgewicht von 180 bis 190 g/EQ. Es können auch Mischungen mehrerer Epoxidharze verwendet werden. Bevorzugt ist das Epoxid ein Diglycidylether von Bisphenol A oder von Bisphenol F oder einem Gemisch davon. In diesem Zusammenhang entspricht der "*Epoxidwert*" der Anzahl der Mole der Epoxidgruppen in 100g Harz (im Folgenden auch als nEP bezeichnet). Das Epoxyäquivalentgewicht (EEW) berechnet sich daraus und entspricht dem Kehrwert aus dem Epoxidwert. Die üblicherweise verwendete Einheit ist "g/val".

Als mehrwertige Phenole sind beispielsweise zu nennen: Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan, 4,4'-Dihydroxy-3,3'-dimethyldiphenylpropan und dergleichen.

Das Epoxidharz hat bevorzugt ein Molekulargewicht von mindestens 300 Dalton. Das Epoxidharz hat ein Molekulargewicht von höchstens 10.000 Dalton und bevorzugt höchstens 5.000 Dalton. Das Molekulargewicht des Epoxidharzes hängt dabei im Wesentlichen von der gewünschten Viskosität und Reaktivität der Reaktionsharz-Zusammensetzung und/oder von der zu erreichenden Vernetzungsdichte ab.

Erfindungsgemäß können auch Kombinationen unterschiedlicher Epoxidharze als Epoxidharz verwendet werden.

Die Harzkomponente (A) der erfindungsgemäßen Reaktionsharz-Zusammensetzung umfasst die Verbindung (a-1) und die Verbindung (a-2) als zwei getrennte Verbindungen und umfasst ferner eine verbrückende Verbindung (bridging agent) (a-3), die mindestens zwei reaktive funktionelle Gruppen aufweist, wovon eine radikalisch (co)polymerisieren und eine mit einem Amin reagieren kann. Es hat sich herausgestellt, dass die Anwesenheit einer derartigen verbrückenden Verbindung (a-3) zu einer weiteren Verbesserung der Niedertemperatureigenschaft führt.

Bevorzugt enthält die verbrückende Verbindung (a-3) eine radikalisch härtbare funktionelle Gruppe ausgewählt unter einer Acrylat-, Methacrylat-, Vinylether-, Vinylester- und Allylethergruppe. Stärker bevorzugt ist die radikalisch härtbare funktionelle Gruppe der verbrückenden Verbindung (a-3) unter einer Acrylat-, Methacrylat-, Vinylether-, Vinylester- und Allylethergruppe ausgewählt, wobei eine Methacrylat- oder Acrylatgruppe stärker bevorzugt und eine Methacrylatgruppe noch stärker bevorzugt ist.

Bevorzugt enthält die verbrückende Verbindung (a-3) ein Isocyanat, ein Epoxid oder ein cyclisches Carbonat als funktionelle Gruppe, die mit einem Amin reagieren kann, stärker bevorzugt ein Epoxid und noch stärker bevorzugt einen Glycidylether. Stärker bevorzugt ist die funktionelle Gruppe der verbrückenden Verbindung (a-3), die mit einem Amin reagieren kann, unter einer Isocyanat-, einer Epoxid-, einer cyclischen Carbonat-, Acetoacetoxy- und einer Oxalsäure-Amid-Gruppe ausgewählt, stärker bevorzugt ist eine Epoxidfunktionalität und noch stärker bevorzugt eine Glycidyletherfunktionalität.

In einer bevorzugten Ausführungsform ist die radikalisch polymerisierbare funktionelle Gruppe der verbrückenden Verbindung eine Methacrylatgruppe und die funktionelle Gruppe, die mit einem Amin reagieren kann, eine Epoxidgruppe.

Bevorzugt ist das Molekulargewicht Mn der verbrückenden Verbindung geringer als 400 Dalton, da dies dazu führt, dass die Niedertemperatureigenschaft noch stärker verbessert werden kann, stärker bevorzugt geringer als 350 Dalton, noch stärker bevorzugt geringer als 300 Dalton und noch stärker bevorzugt geringer als 250 Dalton.

In einer bevorzugten Ausführungsform umfasst die Reaktionsharz-Zusammensetzung ein Glycidylmethacrylat als verbrückende Verbindung (a-3). In einer stärker bevorzugten Ausführungsform ist die verbrückende Verbindung (a-3) ein Glycidylmethacrylat.

Erfindungsgemäß wird die Härtung der radikalisch härtbaren Verbindung mit Dialkylperoxiden (R₁-O-O-R₂) (h-1) initiiert. Im Sinne der Erfindung bedeutet "Dialkylperoxid", dass die Peroxo-Gruppe (-O-O-) an ein Kohlenstoffatom gebunden ist, das nicht Bestandteil eines aromatischen Systems ist, aber an ein aromatisches System, wie etwa ein Benzolring, angebunden sein kann.

Geeignete Dialkylperoxide (h-1) sind beispielsweise Dicumylperoxid, *tert-*Butylcumylperoxid, 1,3- oder 1,4-Bis(tert-butylperoxyisopropyl)benzol, 2,5-Dimethyl-2,5-di(*tert*-butylperoxyl)hexin(3), 2,5-Dimethyl-2,5-di(*tert*-butylperoxyl)hexan, Di-*tert-*butylperoxid, wobei Dicumylperoxid bevorzugt ist. In diesem Zusammenhang wird auf die GB 582,890 A1 verwiesen.

Das Dialkylperoxid (h-1) kann als solches in Form eines Feststoffes oder als Flüssigkeit vorliegen. Ebenso kann es zusammen mit einem Lösungsmittel als Lösung, als Emulsion, als Suspension oder als Paste vorliegen. Besonders bevorzugt ist das Dialkylperoxid (h-1) in dem als Härtungsmittel für die mit einem Amin reagierende Verbindung (h-2) verwendete Amin löslich.

Das zur Härtung des Epoxidharzes (a-2) verwendete mindestens eine Amin (h-2) ist zweckmäßig ein primäres und/oder sekundäres Amin. Das Amin kann aliphatisch, einschließlich cycloaliphatisch, aromatisch und/oder araliphatisch sein und ein oder mehrere Amino-Gruppen (im Folgenden als Polyamin bezeichnet) tragen. Das Polyamin trägt bevorzugt mindestens zwei primäre aliphatische Amino-Gruppen. Ferner kann das Polyamin auch Amino-Gruppen tragen, die sekundären oder tertiären Charakter haben. Auch Polyaminoamide und Polyalkylenoxid-polyamine oder Aminaddukte, wie Amin-Epoxy Harzaddukte oder Mannichbasen sind ebenso geeignet. Als araliphatisch werden Amine definiert, die sowohl aromatische als auch aliphatische Reste enthalten.

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin (Neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Bevorzugt sind Polyamine, wie 2-Methylpentandiamin (DYTEK A®), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(amino-methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

In diesem Zusammenhang wird Bezug genommen auf die Anmeldung EP 1 674 495 A1, deren Inhalt hiermit in diese Anmeldung aufgenommen wird.

Das Amin (h-2) kann entweder alleine oder als Gemisch aus zweien oder mehreren davon eingesetzt werden.

In einer bevorzugten Ausführungsform der Erfindung enthält die Zusammensetzung weitere niederviskose, radikalisch polymerisierbare Verbindungen als Reaktivverdünner für die radikalisch härtbare Verbindung (a-1), um deren Viskosität falls erforderlich, anzupassen. Diese werden zweckmäßig zu der radikalisch härtbaren Verbindung (a-1) gegeben.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer weiter bevorzugten Ausführungsform der Erfindung enthält die Zusammensetzung weitere Epoxid-funktionalisierte Verbindungen als Reaktivverdünner für das Epoxidharz, um dessen Viskosität falls erforderlich, anzupassen. Diese werden zweckmäßig zu dem Epoxidharz (a-2) gegeben.

Als Reaktivverdünner finden Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxid-Funktionalität von mindestens 2, wie 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE), oder ferner Mischungen von zwei oder mehr dieser Reaktivverdünner Verwendung, vorzugsweise Triglycidylether, besonders bevorzugt als Gemisch aus 1,4-Butandioldiglycidylether (BDDGE) und Trimethylolpropantriglycidylether (TMPTGE).

Die Reaktion des Epoxidharzes (a-2) kann durch Zugabe geeigneter Verbindungen beschleunigt werden. Derartige Verbindungen sind dem Fachmann bekannt. Beispielhaft wird auf die in der Anmeldung WO 99/29757 A1 beschriebenen Novolak-Harze hingewiesen, die sich besonders vorteilhaft als Beschleuniger erwiesen haben. In diesem Zusammenhang wird Bezug genommen auf die Anmeldung WO 99/29757, deren Inhalt hiermit in diese Anmeldung aufgenommen wird.

In einer besonders bevorzugten Ausführungsform der Erfindung umfasst der Beschleuniger ferner ein Aminophenol oder einen Ether davon, der mindestens eine tertiäre Aminogruppe gegebenenfalls zusammen mit einer primären und/oder sekundären Aminogruppe aufweist, als Beschleuniger. Der Beschleuniger ist bevorzugt unter Verbindungen der allgemeinen Formel (III) ausgewählt, 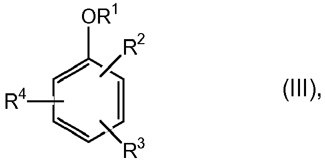 in der R¹ Wasserstoff oder ein linearer oder verzweigter C₁-C₁₅-Alkylrest ist, R² (CH₂)ₙNR⁵R⁶- oder NH(CH₂)ₙNR⁵R⁶- ist, in denen R⁵ und R⁶ unabhängig voneinander ein linearer oder verzweigter C₁-C₁₅-Alkylrest sind und n = 0 oder 1 ist, R³ und R⁴ unabhängig voneinander Wasserstoff, (CH₂)ₙNR⁷R⁸ oder NH(CH₂)ₙNR⁷R⁸ sind, R⁷ und R⁸ unabhängig voneinander Wasserstoff oder ein linearer oder verzweigter C₁-C₁₅-Alkylrest sind und n = 0 oder 1 ist.

R¹ ist bevorzugt Wasserstoff oder ein C₁-C₁₅-Alkylrest, insbesondere ein linearer C₁-C₁₅-Alkylrest, stärker bevorzugt Methyl oder Ethyl und am stärksten bevorzugt Methyl.

Bevorzugt ist das Phenol der Formel (I) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylreste sind, sind diese bevorzugt ein C₁-C₅-Alkylrest, stärker bevorzugt Methyl oder Ethyl und am stärksten bevorzugt Methyl.

Als Beschleuniger kann entweder eine Verbindung oder ein Gemisch von mindestens zwei Verbindungen der Formel (I) eingesetzt werden.

Bevorzugt ist der Beschleuniger unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Beschleuniger 2,4,6-Tris(dimethylaminomethyl)phenol.

Bevorzugt ist der Beschleuniger für die Reaktion des Epoxidharzes (a-2) mit einem Amin reaktionsinhibierend getrennt von dem Epoxidharz.

Als Inhibitor sowohl für die Lagerstabilität der radikalisch härtbaren Verbindung (a-1) und damit des Harzbestandteils (A) als auch zur Einstellung der Gelzeit sind die für radikalisch polymerisierbare Verbindungen üblicherweise als Inhibitoren verwendeten nicht-phenolischen Verbindungen, wie stabile Radikale und/oder Phenothiazine, geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, insbesondere, wenn als Beschleunigerbestandteil ein zweiwertiges Kupfersalz verwendet wird, da die Inhibitoren mit dem Kupfersalz reagieren. Dies kann sich nachteilig auf die Lagerstabilität und die Gelzeit auswirken.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Als *N*-Oxyl-Radikale können beispielsweise solche verwendet werden, wie sie in der DE 199 56 509 A1 beschrieben sind. Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin-Nitroxidradikale, wie 2,3-Dihydro-2,2-diphenyl-3-(phenylimino)-1H-indol-1-oxylnitroxid, oder β-phosphorylierte Nitroxidradikale, wie 1-(Diethoxyphosphinyl)-2,2-dimethylpropyl-1,1-dimethylmethyl-nitroxid, und dergleichen.

Ferner können in para-Stellung zur Hydroxylgruppe substituierte Pyrimidinol- oder Pyridinol-Verbindungen, wie sie in der nicht vorveröffentlichten Patentschrift DE 10 2011 077 248 B1 beschrieben sind, als Inhibitoren eingesetzt werden.

Die Inhibitoren können, abhängig von den gewünschten Eigenschaften der Harzzusammensetzungen, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelierzeit der Reaktionsharzformulierung zeigt.

Zweckmäßig werden die Inhibitoren dem Harzbestandteil (A) zugegeben.

In einer Ausführungsform kann die Reaktionsharz-Zusammensetzung zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung der Zweikomponenten-Dübelmasse z.B. in Diamant-gebohrten Bohrlöchern von Bedeutung und erhöht die Lastwerte. Geeignete Haftvermittler sind aus der Gruppe der Silane, die mit weiteren reaktiven organischen Gruppen funktionalisiert sind und in das Polymernetzwerk eingebunden werden können, ausgewählt, wie 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyldiethoxysilan, N-2-(Aminoethyl)-3-aminopropyltriethoxysilan, 3-Aminopropyltrimethoxysilan, 3-Aminopropyltriethoxysilan, N-Phenyl-3-aminoethyl-3-aminopropyltrimethoxysilan, 3-Mercaptopropyltrimethoxysilan und 3-Mercaptopropylmethyldimethoxysilan, wobei 3-Aminopropyltriethoxysilan bevorzugt ist. In dieser Hinsicht wird Bezug genommen auf die Anmeldungen DE200910059210 und DE201010015981 verwiesen, deren Inhalt hiermit in die Anmeldung aufgenommen wird.

Die Reaktionsharz-Zusammensetzung kann ferner anorganische Zuschlagstoffe enthalten, wie Füllstoffe und/oder weitere Zusätze, wobei die Zuschlagstoffe dem Harzbestandteil (A) und/oder dem Härterbestandteil (H) zugegeben werden können.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Anmeldungen WO 02/079341 und WO02/079293 sowie WO 2011/128061 A1, deren Inhalt hiermit in diese Anmeldung aufgenommen wird.

Erfindungsgemäß werden die Komponenten der Reaktionsharz-Zusammensetzung räumlich so angeordnet, dass der Harzbestandteil (A), welcher die Verbindung, die radikalisch härten kann (a-1) und die Verbindung die mit einem Amin härten kann (a-2), das Dialkylperoxid (h-1) und das Amin (h-2) getrennt voneinander vorliegen.

In einer Ausführungsform der Erfindung liegt die Reaktionsharz-Zusammensetzung als Zweikomponentensystem vor. Zweckmäßig wird dabei das Beschleunigergemisch (B) zusammen mit dem Dialkylperoxid (h-1) und dem Amin (h-2) in einer Komponente, der Härterkomponente gelagert. Dementsprechend wird der Harzbestandteil zusammen mit dem bzw. den Reaktivverdünner(n), dem Inhibitor und dem Reduktionsmittel, sofern diese Bestandteile zugegeben werden, in einer weiteren getrennten Komponente, der Harzkomponente, gelagert. Damit wird zum einen verhindert, dass die Härtung der Harzkomponente bereits bei der Lagerung einsetzt.

Gemäß einer bevorzugten Ausführungsform der Erfindung ist die Reaktionsharz-Zusammensetzung in einer Patrone, einem Gebinde, einer Kapsel oder einem Folienbeutel, welcher zwei oder mehrere Kammern umfasst, die voneinander getrennt sind und in denen der Harzbestandteil und der Härterbestandteil oder der Harzbestandteil und das mindestens eine Dialkylperoxid bzw. das mindestens eine Amin in reaktionsinhibierend getrennt voneinander enthalten sind, enthalten.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der Erfindung ist die Verwendung der Reaktionsharz-Zusammensetzung als Bindemittel, insbesondere zur Befestigung von Verankerungsmitteln in Bohrlöchern verschiedenen Untergrunds und zum baulichen Kleben.

Die vorliegende Erfindung betrifft auch die Verwendung der oben definierten Reaktionsharz-Zusammensetzung für bauliche Zwecke, umfassend das Aushärten der Zusammensetzung durch Mischen der Harzkomponente (A) mit der Härterkomponente (H) oder der Harzkomponente (A) mit dem mindestens einen Peroxid (B) und dem mindestens einen Amin (C) der Härterkomponente (H).

Stärker bevorzugt wird die erfindungsgemäße Reaktionsharz-Zusammensetzung zum Befestigen von Gewindeankerstangen, Bewehrungseisen, Gewindehülsen und Schrauben in Bohrlöchern in verschiedenen Untergründen verwendet, umfassend das Mischen der Harzkomponente (A) mit der Härterkomponente (H) oder der Harzkomponente (A) mit dem mindestens einen Peroxid (B) und dem mindestens einen Amin (C) der Härterkomponente (H), Einbringen der Mischung in das Bohrloch, Einführen der Gewindeankerstangen, der Bewehrungseisen, der Gewindehülsen und der Schrauben in die Mischung in dem Bohrloch und Aushärten der Mischung.

Die erfindungsgemäße Reaktionsharz-Zusammensetzung wird bevorzugt bei einer Temperatur im Bereich von -20 bis +200°C, bevorzugt im Bereich von -20 bis +100°C und am stärksten bevorzugt im Bereich von -10 bis +60°C (sogenanntes Kalthärten) gehärtet.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

### Beispiele 1 bis 7

Eine Harzkomponente wurde hergestellt, indem 19,38 g eines Bisphenol A Glycerolatdimethacrylats, 51,61 g eines Bisphenol A-diglycidylethers, 12,85 1,4-Butandioldimethacrylat, 16,16 Glycidylmethacrylat, 0,04 g 4-Hydroxy-2,2,6,6-tetramethylpiperidin-N-oxyl und 65 ppm Methylhydrochinon zu einer homogenen Lösung verrührt wurden. Zu diesem Harzgemisch werden bei +60°C jeweils die in Tabelle 1 angegebenen Beschleuniger in den angegebenen Mengen gelöst.

Für die Härterkomponente wurden 4,06 g Dicumylperoxoid in 13,28 1,5-Diamino-2-methylpentan homogen gelöst. Diese Lösung wurde bei +25°C in die Harzkomponente gegeben, homogenisiert und jeweils die Gelzeit (t (25 → 80°C)) sowie die Zeit bis zum Erreichen der maximalen Temperatur (t (25 → T(max)) bestimmt.

Die Bestimmung der Gelzeiten erfolgt mit einer handelsüblichen Vorrichtung (GELNORM®-Gel Timer) bei einer Temperatur von 25°C. Hierzu werden die Komponenten gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Temperatur der Probe wird gegen die Zeit aufgetragen. Die Auswertung erfolgt gemäß DIN16945, Blatt 1 und DIN 16916. Die Gelzeit ist die Zeit, bei der ein Temperaturanstieg von 25°C nach 80°C (t (25 → 80°C) erreicht wird.

Die Ergebnisse der Gelzeitbestimmungen sind in Tabelle 1 aufgeführt.

Aus Tabelle 1 ist ersichtlich, dass die erfindungsgemäßen Reaktionsharz-Zusammensetzungen Gelzeiten zwischen 25 und 78 Minuten aufwiesen und innerhalb von etwa 30 bis 85 Minuten auch vollständig ausgehärtet waren. Die Bestimmten Maximaltemperaturen (T(max)) lassen darauf schließen, dass sowohl der Epoxy-Amin-Anteil als auch der radikalisch härtbare Anteil aushärtete. Dies führt zu guten mechanischen Eigenschaften und damit zur Eignung als Bindemittel in anorganisch gefüllten Reaktionsharz-Zusammensetzungen.

### Vergleichsbeispiele

Als Vergleich wurden bei den Zusammensetzung entsprechenden den Beispielen 1 bis 7 die Beschleuniger und das Reduktionsmittel weggelassen. Dabei wurde beobachtet, dass die Gelzeiten t (25 → 80°C) deutlich über 90 Minuten anstiegen und die Maximaltemperaturen deutlich unter 100°C sanken. Dies führt zu ungenügenden mechanischen Eigenschaften ("weiche Polymere") und weist darauf hin, dass hier nur der Epoxy-Amin-Anteil aushärtete, wohingegen die radikalische Polymerisation nur ungenügend oder gar nicht stattfand.

**Tabelle 1: Zusammensetzung des Beschleunigergemisches, Gelzeiten und Maximaltemperaturen**

| **Beispiel** | | **1** | **2** | **3** | **4** | **5** | **6** | **7** |
|---|---|---|---|---|---|---|---|---|
| Harz | | 100 | | | | | | |
| Beschleuniger 1 (b-1) | Cu(II)octoat | | 1,00 | 1,00 | 2,50 | 1,00 | 1,00 | |
| | TIB-KAT808 ¹⁾ | | | | | | | 1,00 |
| | CuCl·DABCO ²⁾ | 1,00 | | | | | | |
| Beschleuniger 2 (b-2) | AAEMA ³⁾ | 5,00 | 5,00 | | 5,00 | 5,00 | 5,00 | 5,00 |
| | ABL ⁴⁾ | | 5,00 | 5,00 | | | | |
| Beschleuniger 3 (b-3) | VP0132 ⁵⁾ | 1,00 | 1,00 | 1,00 | 2,50 | 1,00 | | |
| | AB106355 ⁶⁾ | | | | | | 1,00 | |
| t (25 → 80°C) | min | 33 | 25 | 34 | 38 | 49 | 78 | 75 |
| t (25 → T(max)) | min | 38 | 29 | 36 | 41 | 56 | 85 | 80 |
| T (max) | °C | 175 | 155 | 170 | 160 | 151 | 114 | 135 |

| | | | | | | | | |
|---|---|---|---|---|---|---|---|---|
| ¹⁾ Lösung von Cu(II)naphthenat in white spirits (Fa. TIB Chemicals AG) ²⁾ CuCl·1,4-Diazabicyclo[2.2.2]octan (Fa. Sigma Aldrich) ³⁾ 2-(Acetoacetoxy)ethylmethacrylat ⁴⁾ α-Acetylbutyrolacton ⁵⁾ Vanadium(V)salz eines sauren Phosphorsäureesters, in Lösung (Fa. OMG Borchers GmbH) ⁶⁾ Vanadium(IV)oxid-bis(2,4-pentandionat) (Fa. ABCR GmbH & Co. KG) | | | | | | | | |

## Patentansprüche

1. Reaktionsharz-Zusammensetzung, umfassend einen Harzbestandteil (A), der eine Verbindung (a-1), die radikalisch polymerisieren kann, eine Verbindung (a-2), die mit einem Amin reagieren kann, und eine verbrückende Verbindung (a-3) mit mindestens zwei reaktiven Funktionalitäten, wovon eine radikalisch (co)polymerisieren und eine mit einem Amin reagieren kann, enthält, und einen Härterbestandteil (H), der mindestens ein Dialkylperoxid (h-1) und mindestens ein Amin (h-2) enthält, wobei der Harzbestandteil (A) und der Härterbestandteil (H) oder der Harzbestandteil (A) und das mindestens eine Dialkylperoxid (h-1) und das mindestens eine Amin (h-2) des Härterbestandteils (H) räumlich getrennt voneinander sind, um eine Reaktion vor dem Vermischen dieser Komponenten zu verhindern, **dadurch gekennzeichnet, dass** der Härterbestandteil (H) ferner ein Beschleunigergemisch (B) enthält, das eine Kupferverbindung (b-1) und eine 1,3-Dicarbonylverbindung (b-2) umfasst, mit der Maßgabe, dass der Harzbestandteil (A) ferner ein Reduktionsmittel (R) enthält, wenn die Kupferverbindung (b-1) zwei- oder mehrwertig ist.

2. Reaktionsharz-Zusammensetzung nach Anspruch 1, **dadurch gekennzeichnet, dass** das Reduktionsmittel (R) aus der Gruppe ausgewählt ist, die aus Metallen, die unter Cu, Zn und Fe ausgewählt sind, Ascorbinsäure, Ascorbaten, Ascorbinsäure-6-palmitat, Ascorbinsäure-6-stearat, Zinn(II)-Salzen, Brenzkatechin und Derivaten davon, Hydrochinon oder, gegebenenfalls substituierten, Derivaten davon und Eisen(II)-Salzen besteht.

3. Reaktionsharz-Zusammensetzung nach Anspruch 1 oder 2, **dadurch gekennzeichnet, dass** die Kupferverbindung (b-1) ein zweiwertiges oder ein oxidationsstabiles einwertiges Kupfersalz ist.

4. Reaktionsharz-Zusammensetzung nach Anspruch 3, **dadurch gekennzeichnet, dass** die Kupferverbindung (b-1) ein Kupfer(II)carboxylat ist.

5. Reaktionsharz-Zusammensetzung nach einem der vorhergehenden Ansprüche, **dadurch gekennzeichnet, dass** die 1,3-Dicarbonylverbindung (b-2) eine Verbindung der allgemeinen Formel (I) ist 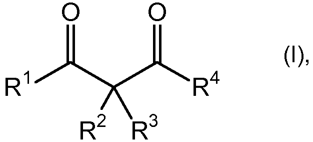 in der
R¹ und R⁴ unabhängig voneinander für einen n-wertigen organischen Rest stehen;
R² und R³ unabhängig voneinander für Wasserstoff oder einen n-wertigen organischen Rest stehen;
oder R² mit R³ oder R³ mit R⁴ zusammen einen Ring bilden, welcher gegebenenfalls Heteroatome im oder am Ring umfasst;
oder R¹ und R⁴ unabhängig voneinander für -OR⁵ stehen, wobei R⁵ für eine, gegebenenfalls substituierte, Alkyl-, Cycloalkyl-, Aryl- oder Aralkylgruppe steht, oder R⁵ zusammen mit R³ einen Ring bildet, welcher gegebenenfalls weitere Heteroatome im oder am Ring aufweist.

6. Reaktionsharz-Zusammensetzung nach einem der vorhergehenden Ansprüche, **dadurch gekennzeichnet, dass** das Beschleunigergemisch (B) ferner eine Vanadiumverbindung (b-3) umfasst.

7. Reaktionsharz-Zusammensetzung nach Anspruch 6, **dadurch gekennzeichnet, dass** die Vanadiumverbindung (b-3) eine Vanadium(IV)- oder eine Vanadium(V)verbindung ist.

8. Reaktionsharz-Zusammensetzung nach einem der vorhergehenden Ansprüche, **dadurch gekennzeichnet, dass** die Verbindung (a-1), die radikalisch polymerisieren kann, ein ungesättigtes Polyesterharz, ein Vinylesterharz und/oder ein Vinylester-Urethanharz ist.

9. Reaktionsharz-Zusammensetzung nach einem der vorhergehenden Ansprüche, **dadurch gekennzeichnet, dass** die Verbindung (a-2), die mit einem Amin reagieren kann, ein epoxidfunktionalisiertes Harz ist.

10. Reaktionsharz-Zusammensetzung nach einem der vorhergehenden Ansprüche, **dadurch gekennzeichnet, dass** die verbrückende Verbindung (a-3) eine radikalisch härtbare Funktionalität, ausgewählt unter einer Acrylat-, Methacrylat-, Vinylether-, Vinylester- und Allyletherfunktionalität, und eine Funktionalität, die mit einem Amin reagieren kann, ausgewählt unter einer Isocyanat-, Epoxid-, cyclischer Carbonat-, Acetoacetoxy- und Oxalsäureamidfunktionalität, enthält.

11. Reaktionsharz-Zusammensetzung nach Anspruch 10, **dadurch gekennzeichnet, dass** die radikalisch (co)polymerisierbare Funktionalität der verbrückenden Verbindung (a-3) eine Methacrylatfunktionalität und die mit einem Amin reagierende Funktionalität eine Epoxidfunktionalität ist.

12. Reaktionsharz-Zusammensetzung nach einem der vorhergehenden Ansprüche, **dadurch gekennzeichnet, dass** das Dialkylperoxid (h-1) aus der Gruppe ausgewählt ist, die aus Dicumylperoxid, *tert*-Butylcumylperoxid, 1,3- oder 1,4-Bis(*tert*-butylperoxyisopropyl)benzol, 2,5-Dimethyl-2,5-di(*tert-*butylperoxyl)hexin(3), 2,5-Dimethyl-2,5-di(*tert*-butylperoxyl)hexan und Di-*tert-*butylperoxid besteht.

13. Reaktionsharz-Zusammensetzung nach einem der vorhergehenden Ansprüche, **dadurch gekennzeichnet, dass** das Amin (h-2) aus der Gruppe ausgewählt ist, die aus aliphatischen Aminen, bevorzugt primären und/oder sekundären aliphatischen Aminen, aliphatischen und araliphatischen Polyaminen besteht.

14. Reaktionsharz-Zusammensetzung nach einem der vorhergehenden Ansprüche, **dadurch gekennzeichnet, dass** die Zusammensetzung ferner einen nicht-phenolischen Inhibitor (I) enthält.

15. Reaktionsharz-Zusammensetzung nach Anspruch 14, **dadurch gekennzeichnet, dass** der nicht-phenolische Inhibitor (I) ein stabiles *N*-Oxyl-Radikal ist.

16. Reaktionsharz-Zusammensetzung nach einem der vorhergehenden Ansprüche, **dadurch gekennzeichnet, dass** der Harzbestandteil (A) ferner einen Reaktivverdünner umfasst.

17. Reaktionsharz-Zusammensetzung nach Anspruch 16, **dadurch gekennzeichnet, dass** mindestens ein Teil des Reaktivverdünners radikalisch (co)polymerisieren und/oder mit einem Amin reagieren kann.

18. Reaktionsharz-Zusammensetzung nach einem der vorhergehenden Ansprüche, **dadurch gekennzeichnet, dass** der Harzbestandteil (A) und/oder der Härterbestandteil (H) mindestens einen anorganischen Füllstoff enthält, der aus der Gruppe ausgewählt ist, die aus Quarz, Glass, Korund, Porzellan, Steingut, Leichtspat, Schwerspat, Gips, Talk, Kreide oder Gemischen davon besteht, wobei diese Füllstoffe in Form von Sanden, Mehlen oder Formkörpern, insbesondere in Form von Fasern oder Kugeln enthalten sind.

19. Reaktionsharz-Zusammensetzung nach einem der vorhergehenden Ansprüche, **dadurch gekennzeichnet, dass** sie in einer Kartusche, einem Gebinde, einer Kapsel oder einem Folienbeutel, der zwei oder mehrere Kammern umfasst, die voneinander getrennt sind und in denen der Harzbestandteil (A) und der Härterbestandteil (H) oder der Harzbestandteil (A) und das mindestens eine Dialkylperoxid (h-1) und das mindestens eine Amin (h-2) des Härterbestandteils (H) getrennt voneinander enthalten sind, um eine Reaktion zu verhindern, enthalten ist.

20. Verwendung einer Reaktionsharz-Zusammensetzung nach einem der Ansprüche 1 bis 19 für bauliche Zwecke, umfassend die Härtung der Zusammensetzung durch Mischen des Harzbestandteils (A) mit dem Härterbestandteil (H) oder des Harzbestandteils (A) mit dem mindestens einen Dialkylperoxid (h-1) und dem mindestens einen Amin (h-2) des Härterbestandteils (H).

21. Verwendung nach Anspruch 20 zur Befestigung von Gewindeankerstangen, Bewehrungseisen, Gewindehülsen oder Schrauben in Bohrlöchern in beliebigem Untergrund, umfassend das Mischen des Harzbestandteils (A) mit dem Härterbestandteil (H) oder des Harzbestandteils (A) mit dem mindestens einen Dialkylperoxid (h-1) und dem mindestens einen Amin (h-2) des Härterbestandteils (H); das Einbringen dieser Mischung in das Bohrloch; das Einführen der Gewindeankerstangen, Bewehrungseisen, Gewindehülsen oder Schrauben in die Mischung und das Aushärten dieser Mischung.

22. Verwendung nach einem der Ansprüche 20 und 21, **dadurch gekennzeichnet, dass** die Aushärtung bei einer Temperatur im Bereich von -20 bis +200°C, bevorzugt im Bereich von -20 bis +100°C und am stärksten bevorzugt im Bereich von -10 bis +60°C durchgeführt wird.

23. Gehärtete bauliche Gegenstände, erhalten durch Aushärten der Reaktionsharz-Zusammensetzung nach einem der Ansprüche 1 bis 19 oder erhalten durch die Verwendung nach einem der Ansprüche 20 bis 22.

## Claims

1. Reaction resin compound, comprising a resin component (A), which contains a compound (a-1), which can radically polymerise, a compound (a-2), which can react with an amine, and a bridging compound (a-3) with at least two reactive functionalities, one of which can radically (co)polymerise and one of which can react with an amine, and a hardener component (H), which contains at least one dialkyl peroxide (h-1), and at least one amine (h-2), in which the resin component (A) and the hardener component (H) or the resin component (A) and the at least one dialkyl peroxide (h-1) and the at least one amine (h-2) of the hardener component (H) are separated from each other spatially, in order to prevent a reaction before mixing these components, **characterised in that** the hardener component (H) also contains an accelerator mixture (B), which comprises a copper compound (b-1), and a 1,3-dicarbonyl compound (b-2), with the proviso that the resin component (A) also contains a reducing agent (R), if the copper compound (b-1) is bivalent or polyvalent.

2. Reaction resin compound according to claim 1, **characterised in that** the reducing agent (R) is selected from the group, which consists of metals, which are selected from amongst Cu, Zn and Fe, ascorbic acid, ascorbates, ascorbic acid 6-palmitate, ascorbic acid 6-stearate, tin[II) salts, pyrocatechol and derivatives of it, hydroquinone or, if necessary substituted, derivatives of it and iron(II) salts.

3. Reaction resin compound according to claim 1 or 2, **characterised in that** the copper compound (b-1) is a bivalent or a monovalent copper salt resistant to oxidation.

4. Reaction resin compound according to claim 3, **characterised in that** the copper compound (b-1) is a copper(II) carboxylate.

5. Reaction resin compound according to one of the previous claims, **characterised in that** the 1,3-dicarbonyl compound (b-2) is a compound with the general formula (I) 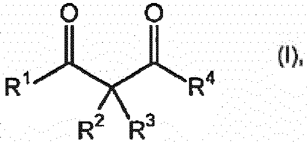 in which
R¹ and R⁴ independently of each other stand for an n-valent organic residue;
R² and R³ independently of each other stand for hydrogen or an n-valent organic residue;
or R² with R³ or R³ with R⁴ together form a ring, which if necessary comprises heteroatoms in or on the ring;
or R¹ and R⁴ independently of each other stand for -OR⁵, in which R⁵ stands for an, if necessary substituted, alkyl, cycloalkyl, aryl or aralkyl group, or R⁵ together with R³ forms a ring, which if necessary has further heteroatoms in or on the ring.

6. Reaction resin compound according to one of the previous claims, **characterised in that** the accelerator mixture (B) also comprises a vanadium compound (b-3).

7. Reaction resin compound according to claim 6, **characterised in that** the vanadium compound (b-3) is a vanadium(IV) or a vanadium(V) compound.

8. Reaction resin compound according to one of the previous claims, **characterised in that** the compound (a-1), which can radically polymerise, is an unsaturated polyester resin, a vinyl ester resin and/or a vinyl ester urethane resin.

9. Reaction resin compound according to one of the previous claims, **characterised in that** the compound (a-2), which can react with an amine, is an epoxy functionalised resin.

10. Reaction resin compound according to one of the previous claims, **characterised in that** the bridging compound (a-3) contains a radically hardenable functionality, selected from amongst an acrylate, methacrylate, vinyl ether, vinyl ester and allyl ether functionality, and a functionality, which can react with an amine, selected from amongst an isocyanate, epoxy, cyclical carbonate, acetoacetoxy and oxalic acid amide functionality.

11. Reaction resin compound according to claim 10, **characterised in that** the radically (co)polymerisable functionality of the bridging compound (a-3) is a methacrylate functionality and the functionality reacting with an amine is an epoxy functionality.

12. Reaction resin compound according to one of the previous claims, **characterised in that** the dialkyl peroxide (h-1) is selected from the group, which consists of dicumyl peroxide, *tert*-butylcumyl peroxide, 1,3- or 1,4-bis(*tert*-butylperoxyisopropyl)benzene, 2,5-dimethyl-2,5-di(*tert*-butylperoxyl)hexyne(3), 2,5-dimethyl-2,5-di(*tert-*butylperoxyl)hexane and di-*tert*-butyl peroxide.

13. Reaction resin compound according to one of the previous claims, **characterised in that** the amine (h-2) is selected from the group, which consists of aliphatic amines, preferably primary and/or secondary aliphatic amines, aliphatic and araliphatic polyamines.

14. Reaction resin compound according to one of the previous claims, **characterised in that** the compound also contains a non-phenolic inhibitor (I).

15. Reaction resin compound according to claim 14, **characterised in that** the non-phenolic inhibitor (I) is a stable *N*-oxyl radical.

16. Reaction resin compound according to one of the previous claims, **characterised in that** the resin component (A) also comprises a reactive diluent.

17. Reaction resin compound according to claim 16, **characterised in that** at least one part of the reactive diluent can radically (co)polymerise and/or can react with an amine.

18. Reaction resin compound according to one of the previous claims, **characterised in that** the resin component (A) and/or the hardener component (H) contains at least one anorganic filler, which is selected from the group, which consists of quartz, glass, corundum, china, earthenware, lightspar, heavy spar, plaster, talc, chalk or mixtures of them, in which these fillers are contained in the form of sands, flours or mouldings, particularly in the form of fibres or balls.

19. Reaction resin compound according to one of the previous claims, **characterised in that** it is contained in a cartridge, a container, a capsule or a foil bag, which comprises two or several chambers, which are separated from each other and in which the resin component (A) and the hardener component (H) or the resin component (A) and the at least one dialkyl peroxide (h-1) and the at least one amine (h-2) of the hardener component (H) are contained, separated from each other, in order to avoid a reaction.

20. Use of a reaction resin compound according to one of claims 1 to 19 for structural purposes, comprising hardening of the compound by mixing the resin component (A) with the hardener component (H) or the resin component (A) with the at least one dialkyl peroxide (h-1) and the at least one amine (h-2) of the hardener component (H).

21. Use according to claim 20 for fixing threaded anchor rods, reinforcing bars, threaded sleeves or screws in holes in any base, comprising mixing the resin component (A) with the hardener component (H) or the resin component (A) with the at least one dialkyl peroxide (h-1) and the at least one amine (h-2) of the hardener component (H); inserting this mixture into the hole; introducing the threaded anchor rods, reinforcing bars, threaded sleeves or screws into the mixture and hardening this mixture

22. Use according to one of claims 20 and 21, **characterised in that** hardening is done at a temperature in the range from -20 to +200°C, preferably in the range from -20 to +100°C and most preferably in the range from -10 to +60°C.

23. Hardened structural objects, obtained by hardening the reaction resin compound according to one of claims 1 to 19 or obtained through use according to one of claims 20 to 22

## Revendications

1. Composition de résine réactive, comprenant un constituant résine (A), qui contient un composé (a-1), qui peut subir une polymérisation radicalaire, un composé (a-2), qui peut réagir avec une amine, et un composé pontant (a-3) ayant au moins deux fonctionnalités réactives, dont l'une peut subir une (co)polymérisation radicalaire et une autre peut réagir avec une amine, et un composant durcisseur (H), qui contient au moins un peroxyde de dialkyle (h-1) et au moins une amine (h-2), le constituant résine (A) et le constituant durcisseur (H), ou le constituant résine (A) et le ou les peroxydes de dialkyle (h-1) et la ou les amines (h-2) du constituant durcisseur (H) étant spatialement séparés les uns des autres, pour empêcher une réaction avant le mélange de ces composants, **caractérisée en ce que** le constituant durcisseur (H) contient en outre un mélange accélérateur (B), qui comprend un composé du cuivre (b-1) et un composé 1,3-dicarbonyle (b-2), à la condition que le constituant résine (A) contienne en outre un réducteur (R) quand le composé du cuivre (b-1) est di- ou polyvalent.

2. Composition de résine réactive selon la revendication 1, **caractérisée en ce que** le réducteur (R) est choisi dans le groupe constitué des métaux, qui sont choisis parmi Cu, Zn et Fe, de l'acide ascorbique, des ascorbates, du 6-palmitate d'ascorbyle, du 6-stéarate d'ascorbyle, des sels d'étain(II), du pyrocatéchol et des dérivés de celui-ci, de l'hydroquinone ou de dérivés éventuellement substitués de celle-ci, et des sels de fer(II).

3. Composition de résine réactive selon la revendication 1 ou 2, **caractérisée en ce que** le composé du cuivre (b-1) est un sel de cuivre divalent, ou monovalent et stable à l'oxydation.

4. Composition de résine réactive selon la revendication 3, **caractérisée en ce que** le composé du cuivre (b-1) est un carboxylate de cuivre(II).

5. Composition de résine réactive selon l'une des revendications précédentes, **caractérisée en ce que** le composé 1,3-dicarbonyle (b-2) est un composé de formule générale (I) 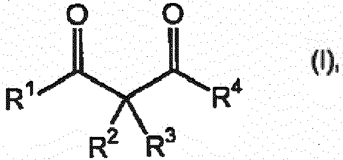 dans laquelle
R¹ et R² représentent chacun indépendamment de l'autre un radical organique n-valent ;
R² et R³ représentent chacun indépendamment de l'autre un atome d'hydrogène ou un radical organique n-valent ;
ou R² ensemble avec R³, ou R³ ensemble avec R⁴, forment un noyau, qui éventuellement comprend des hétéroatomes dans ou sur le noyau ;
ou R¹ et R⁴ représentent chacun indépendamment de l'autre -OR⁵, R⁵ représentant un groupe alkyle, cycloalkyle, aryle ou aralkyle éventuellement substitué, ou R⁵ formant ensemble avec R³ un noyau qui éventuellement comprend des hétéroatomes supplémentaires dans ou sur le noyau.

6. Composition de résine réactive selon l'une des revendications précédentes, **caractérisée en ce que** le mélange accélérateur (B) comprend en outre un composé du vanadium (b-3).

7. Composition de résine réactive selon la revendication 6, **caractérisée en ce que** le composé du vanadium (b-3) est un composé du vanadium(IV) ou un composé du vanadium(V).

8. Composition de résine réactive selon l'une des revendications précédentes, **caractérisée en ce que** le composé (a-1) qui peut subir une polymérisation radicalaire est une résine de polyester insaturée, une résine d'ester vinylique et/ou une résine d'ester vinylique-uréthanne.

9. Composition de résine réactive selon l'une des revendications précédentes, **caractérisée en ce que** le composé (a-2) qui peut réagir avec une amine est une résine à fonctionnalité époxyde.

10. Composition de résine réactive selon l'une des revendications précédentes, **caractérisée en ce que** le composé pontant (a-3) contient une fonctionnalité durcissable par durcissement radicalaire, choisie parmi une fonctionnalité acrylate, méthacrylate, vinyléther, ester vinylique et allyléther, et une fonctionnalité qui peut réagir avec une amine, choisie parmi une fonctionnalité isocyanate, époxyde, carbonate cyclique, acétoacétoxy et oxalamide.

11. Composition de résine réactive selon la revendication 10, **caractérisée en ce que** la fonctionnalité pouvant subir une (co)polymérisation radicalaire du composé pontant (a-3) est une fonctionnalité méthacrylate, et la fonctionnalité qui réagit avec une amine est une fonctionnalité époxyde.

12. Composition de résine réactive selon l'une des revendications précédentes, **caractérisée en ce que** le peroxyde de dialkyle (h-1) est choisi dans le groupe constitué du peroxyde de dicumyle, du peroxyde de *tert-*butylcumyle, du 1,3- ou du 1,9-bis(*tert-*butylperoxyisopropyl)benzène, de la 2,5-diméthyl-2,5-di(*tert*-butylperoxyl)hexyne(3), du 2,5-diméthyl-2,5-di(*tert*-butylperoxyl)hexane et du peroxyde de di-*tert-*butyle.

13. Composition de résine réactive selon l'une des revendications précédentes, **caractérisée en ce que** l'amine (h-2) est choisie dans le groupe constitué des amines aliphatiques, de préférence des amines aliphatiques primaires et/ou secondaires, des polyamines aliphatiques et araliphatiques.

14. Composition de résine réactive selon l'une des revendications précédentes, **caractérisée en ce que** la composition contient en outre un inhibiteur (I) non-phénolique.

15. Composition de résine réactive selon la revendication 14, **caractérisée en ce que** l'inhibiteur (I) non-phénolique est un radical *N*-oxyle stable.

16. Composition de résine réactive selon l'une des revendications précédentes, **caractérisée en ce que** le constituant résine (A) comprend en outre un diluant réactif.

17. Composition de résine réactive selon la revendication 16, **caractérisée en ce qu'**au moins une partie du diluant réactif peut subir une (co)polymérisation radicalaire et/ou peut réagir avec une amine.

18. Composition de résine réactive selon l'une des revendications précédentes, **caractérisée en ce que** le constituant résine (A) et/ou le constituant durcisseur (H) contiennent au moins une charge inorganique qui est choisie dans le groupe constitué du quartz, du verre, du corindon, de la porcelaine, du grès, du spath léger, du spath lourd, du plâtre, du talc, de la craie ou des mélanges de ceux-ci, ces charges étant contenues sous forme de sables, de farines ou d'objets façonnés, en particulier sous forme de fibres ou de billes.

19. Composition de résine réactive selon l'une des revendications précédentes, **caractérisée en ce qu'**elle est contenue dans une cartouche, un récipient, une capsule ou un emballage en film, qui comprend deux compartiments ou plus, qui sont séparés l'un de l'autre, et dans lesquels le composant résine (A) et le composant durcisseur (H), ou le composant résine (A) et le ou les peroxydes de dialkyle (h-1) et la ou les amines (h-2) du constituant durcisseur (H) contenus séparément les uns des autres, pour empêcher une réaction.

20. Utilisation d'une composition de résine réactive selon l'une des revendications 1 à 19 pour des applications dans le bâtiment, comprenant le durcissement de la composition par mélange du constituant résine (A) avec le constituant durcisseur (H) ou du constituant résine (A) avec le ou les peroxydes de dialkyle (h-1) et la ou les amines (h-2) du constituant durcisseur (H).

21. Utilisation selon la revendication 20, pour la fixation de barres d'ancrage par boulonnage, d'aciers d'armature, de douilles filetées ou de vis dans des trous de forage dans un sous-sol quelconque, comprenant le mélange de la composition de résine (A) avec le composant durcisseur (H) ou du composant résine (A) avec le ou les peroxydes de dialkyle (h-1) et la ou les amines (h-2) du composant durcisseur (H) ; l'introduction de ce mélange dans le trou de forage ; l'insertion des barres d'ancrage par boulonnage, des aciers d'armature, des douilles ou des vis dans le mélange, et le durcissement de ce mélange.

22. Utilisation selon l'une des revendications 20 et 21, **caractérisée en ce que** le durcissement est mis en oeuvre à une température comprise dans la plage de -20 à +200°C, de préférence dans la plage de -20 à +100°C, et d'une manière spécialement préférée dans la plage de -10 à +60°C.

23. Objets durcis utilisés dans le bâtiment, obtenus par durcissement de la composition de résine réactive selon l'une des revendications 1 à 19 ou obtenus par l'utilisation selon l'une des revendications 20 à 22.
